# EUROPÄISCHE PATENTSCHRIFT

(11) **EP 3 142 884 B1**
(45) Veröffentlichungstag und Bekanntmachung des Hinweises auf die Patenterteilung: **21.08.2019**
(21) Anmeldenummer: 15726019.1
(22) Anmeldetag: 13.05.2015
(51) Int. Cl.: B60K 5/12

(54) **AGGREGATLAGERUNG**
ASSEMBLY MOUNTING
SUPPORT D'ENSEMBLE

(30) Priorität: 16.05.2014 DE 102014209284
(43) Veröffentlichungstag der Anmeldung: 22.03.2017
(73) Patentinhaber: BOGE Elastmetall GmbH, 49401 Damme (DE)
(72) Erfinder: ROSENDAHL, Marco, 49597 Rieste (DE); HAN, Jin, 53175 Bonn (DE); LAMPARSKI, Tim, 49134 Wallenhorst (DE); RADAKOVIC, Jovan, 53229 Bonn (DE)
(74) Vertreter: Bossmeyer, Jörg Peter
(86) Internationale Anmeldenummer: PCT/EP2015/060596
(87) Internationale Veröffentlichungsnummer: WO 2015/173304

(56) Entgegenhaltungen:
- DE-A1-102009 044 529
- US-A1- 2010 237 220
- US-A1- 2012 267 184

## Beschreibung

Die Erfindung betrifft eine Aggregatlagerung, insbesondere für ein Kraftfahrzeug, umfassend einen Querträger und mindestens ein Aggregatlager zwischen dem Querträger und einem Aggregat.

Generell dienen Aggregatlager in Kraftfahrzeugen dazu, Schwingungen bzw. Relativbewegungen zwischen einem Antriebsaggregat, z.B. einem Getriebe, und der Fahrzeug-Karosserie zu ermöglichen. Allerdings sollen diese Relativbewegungen nicht nur gedämpft, sondern auch in der Distanz oder Auslenkung begrenzt werden, um zu vermeiden, dass Teile des Antriebsaggregates in unerwünschter Weise an der Fahrzeug-Karosserie anschlagen. Außerdem werden durch die Aggregatlager die von der Brennkraftmaschine bzw. vom Getriebe ausgehenden, Geräusch verursachenden Schwingungen von der Karosserie und damit vom Fahrzeuginnenraum ferngehalten.

Getriebelagerungen werden generell in einer Kombination aus Getriebequerträger, Gummi-Metall-Getriebelager und evtl. einer zusätzlichen Getriebebefestigung ausgeführt. Bisher wurden diese Bauteile - abgesehen von den Gummiteilen - in Aluminium ausgeführt.

Aus der DE 10 2009 044 529 A1 ist ein Aggregatlager bekannt, bei dem ein Querträger und Aggregatlagergehäuse aus Kunststoff bestehen und stoffschlüssig miteinander verbunden sind. Die stoffschlüssige Verbindung wird durch Kleben oder Schweißen hergestellt. Das Aggregatlager bildet somit ein einteiliges, festes Bauteil. Hierdurch sollen die Anzahl der Einzelteile reduziert und das Aggregatlager besser gegen ein Rutschen gegenüber einer Aufnahme an der Karosserie oder dem Rahmen eines Kraftfahrzeugs geschützt werden.

Als nachteilig kann jedoch der im Vergleich zu bekannten Aluminium-Aggregatlagern relativ hohe Herstellungsaufwand angesehen werden.

Hiervon ausgehend ist es eine Aufgabe der vorliegenden Erfindung, eine Aggregatlagerung der eingangs genannten Art zu schaffen, die einfacher herzustellen ist. Vorzugsweise soll eine Aggregatlagerung der eingangs genannten Art bereitgestellt werden, bei der auf das Aggregat einwirkende Belastungen zuverlässig auf die Karosserie eines Kraftfahrzeuges abgeleitet werden können.

Diese Aufgabe wird durch die im Anspruch 1 angegebene Erfindung gelöst. Vorteilhafte Ausgestaltungen sind den Unteransprüchen zu entnehmen.

Erfindungsgemäß ist eine Aggregatlagerung geschaffen, insbesondere für ein Kraftfahrzeug, umfassend einen Querträger und mindestens ein Aggregatlager zwischen dem Querträger und dem Aggregat, wobei das mindestens eine Aggregatlager durch eine formschlüssige Verbindung an dem Querträger befestigbar ist.

Eine formschlüssige Verbindung zwischen dem Querträger und dem mindestens einen Aggregatlager ist relativ einfach herstellbar und eignet sich insbesondere für eine Herstellung des Querträgers und des Aggregatlagers aus Kunststoff bzw. einer Kombination aus Kunststoff und Gummi. Des Weiteren ermöglicht eine solche formschlüssige Verbindung eine Endmontage der Aggregatlagerung bei der Montage des Kraftfahrzeugs. Daraus ergibt sich wiederum der Vorteil einer möglichen Lieferung der Aggregatlagerung in Einzelteilen.

Insbesondere ist die formschlüssige Verbindung durch eine Schnappverbindung gebildet. Eine Schnappverbindung ist auch ohne Werkzeuge einfach herstellbar.

In einer Ausgestaltung umfasst das mindestens eine Aggregatlager ein Verbindungsteil, an dem mindestens ein, insbesondere mindestens vier elastisch verformbare Fügeteile angeordnet sind, die in jeweiligen Aussparungen des Querträgers verhakbar sind. In dieser Ausgestaltung lassen sich die zur Befestigung des Aggregatlagers am Querträger vorgesehenen Mittel als separates Bauteil herstellen. Beispielsweise kann das Verbindungsteil aus Kunststoff im Spritzgussverfahren auf einfache und kostengünstige Weise hergestellt werden.

Die Ausgestaltung mit vier Fügeteilen pro Aggregatlager zeichnet sich durch hohe Stabilität aus.

In einer Ausgestaltung sind die Fügeteile jeweils durch einen Schnapphaken mit einer elastisch verformbaren Rastnase gebildet, die gegenüber dem Querträger verrastbar ist. Diese Ausgestaltung ermöglicht eine lösbare Verbindung des mindestens einen Aggregatlagers an dem Querträger. Somit kann das Aggregatlager beispielsweise zu Reparaturzwecken auf einfache Weise vom Querträger gelöst werden.

In einer Ausgestaltung weist der Querträger für jedes der Aggregatlager einen Vorsprung auf, wobei der Vorsprung zur Aufnahme oder Befestigung des Verbindungsteils ausgebildet ist und/oder die Aussparungen in dem Vorsprung angeordnet sind. Diese Ausgestaltung ermöglicht eine einfache Montage des Aggregatlagers an dem Querträger mit Hilfe des Verbindungsteils.

In der Erfindung umfasst das mindestens eine Aggregatlager mindestens einen Elastomerkörper zum Übertragen von Lasten und Schwingungen zwischen dem Aggregat und dem Querträger. Insbesondere ist der Elastomerkörper aus Gummi. In dieser Ausgestaltung ist das Aggregatlager als Gummilager in einem beispielsweise aus Kunststoff gefertigten Lagergehäuse ausgebildet, wodurch Schwingungen des Aggregats gegenüber dem Fahrzeugchassis abgedämpft werden. Der Elastomerkörper kann an dem Verbindungsteil angeordnet und insbesondere in dem Verbindungsteil integriert sein. Somit ergibt sich eine vormontierbare Baugruppe aus Verbindungsteil mit Elastomerkörper, wodurch die Herstellung der Aggregatlagerung flexibler wird.

In der Erfindung umfasst das mindestens eine Aggregatlager ein Anschlussteil, das an einem Ende mit dem Aggregat verbunden werden kann und am gegenüberliegenden Ende einen Stopperabschnitt umfasst, wobei der Stopperabschnitt innerhalb einer Ausnehmung in dem Querträger beweglich anordenbar ist, wobei die Beweglichkeit des Stopperabschnitts in mindestens eine Richtung durch mindestens eine Anschlagfläche an der Ausnehmung begrenzt ist.

Diese Ausgestaltung hat den Vorteil, dass mögliche hohe auf das Aggregat einwirkende Kräfte oder Belastungen, wie sie beispielsweise bei einem Unfall auftreten können, über den Stopperabschnitt und die Anschlagflächen auf kontrollierte d.h. vorbestimmbare Weise auf den Querträger und somit auf das Fahrzeugchassis übertragbar sind.

In einem weiteren nicht beanspruchten Aspekt der Erfindung ist ein derartiges Anschlussteil mit Stopperabschnitt unabhängig von der Art der Verbindung zwischen dem mindestens einen Aggregatlager und dem Querträger vorgesehen. Gemäß diesem Aspekt der Erfindung ist demnach eine Aggregatlagerung für ein Aggregat geschaffen, insbesondere für ein Getriebe in einem Kraftfahrzeug, umfassend einen Querträger und mindestens ein Aggregatlager zwischen dem Querträger und dem Aggregat, wobei das mindestens eine Aggregatlager ein Anschlussteil umfasst, das an einem Ende mit dem Aggregat verbunden werden kann und am gegenüberliegenden Ende einen Stopperabschnitt umfasst, wobei der Stopperabschnitt innerhalb einer Ausnehmung in dem Querträger beweglich anordenbar ist, wobei die Beweglichkeit des Stopperabschnitts in mindestens eine Richtung durch mindestens eine Anschlagfläche an der Ausnehmung begrenzt ist.

In einer Ausgestaltung der Erfindung ist das Anschlussteil aus Metall gebildet und zumindest im Bereich des Stopperabschnitts mit einem Elastomer beschichtet oder umhüllt. In dieser Ausgestaltung werden die bei einer Anschlagbewegung wirkenden Kräfte gegenüber dem Querträger abgedämpft.

In einer Ausgestaltung weist der Stopperabschnitt gegenüber einem angrenzenden Abschnitt des Anschlussteiles einen relativ größeren Querschnitt auf, wobei die Beweglichkeit des Stopperabschnittes innerhalb der Ausnehmung in X-, Y- und Z-Richtung begrenzt ist. Gemäß dieser Ausgestaltung weist das Anschlussteil die Form eines Bolzens auf, wobei der Stopperabschnitt durch den Bolzenkopf gebildet wird, der innerhalb einer entsprechend geformten Aufnahme in dem Querträger angeordnet ist und dessen Beweglichkeit in allen Richtungen begrenzt ist.

In einer Ausgestaltung sind der Querträger und das Verbindungsteil aus Kunststoff, insbesondere aus thermoplastischem Kunststoff, insbesondere aus faserverstärktem Polyamid. Diese Ausgestaltung zeichnet sich durch ein vorteilhaftes Verhältnis aus Stabilität und Gewicht aus.

Die Aggregatlagerung gemäß der vorliegenden Erfindung eignet sich insbesondere für Aggregate in Kraftfahrzeugen wie beispielsweise Getriebe, Motoren oder dgl.

Nachstehend ist anhand der Zeichnung ein Ausführungsbeispiel der Erfindung näher beschrieben. Es zeigt in schematisierter Darstellung:
- Figur 1: eine perspektivische Darstellung einer Aggregatlagerung gemäß einer Ausgestaltung der Erfindung mit einem daran gelagerten Getriebe;
- Figur 2: eine perspektivische Darstellung die Aggregatlagerung aus Figur 1 ohne Getriebe;
- Figur 3: eine Explosionsdarstellung der Aggregatlagerung aus Figur 2;
- Figur 4: einen Querschnitt durch die Aggregatlagerung aus Figur 2;
- Figur 5: eine perspektivische Darstellung eines Aggregatlagers der Aggregatlagerung aus Figur 2; und
- Figur 6: einen Querschnitt durch das Aggregatlager aus Figur 5.

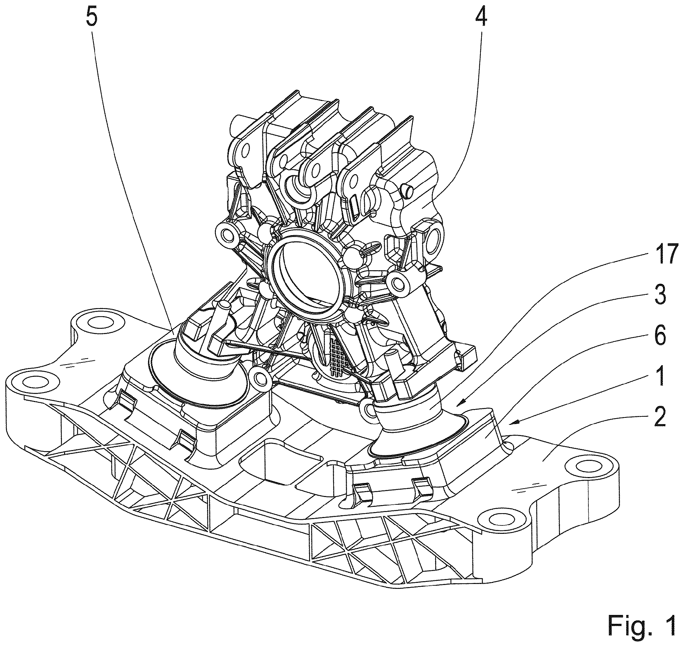

Die Figur 1 zeigt eine perspektivische Darstellung einer Aggregatlagerung 1 gemäß einer Ausgestaltung der Erfindung. Die Aggregatlagerung 1 umfasst einen Querträger 2 mit zwei integrierten Aggregatlagern 3. Die Aggregatlager 3 sind zwischen dem Querträger 2 und einem Getriebe 4 angeordnet, wodurch das Getriebe 4 gegenüber einer mit dem Querträger 2 verbundenen, nicht gezeigten Karosserie eines Kraftfahrzeugs gelagert ist.

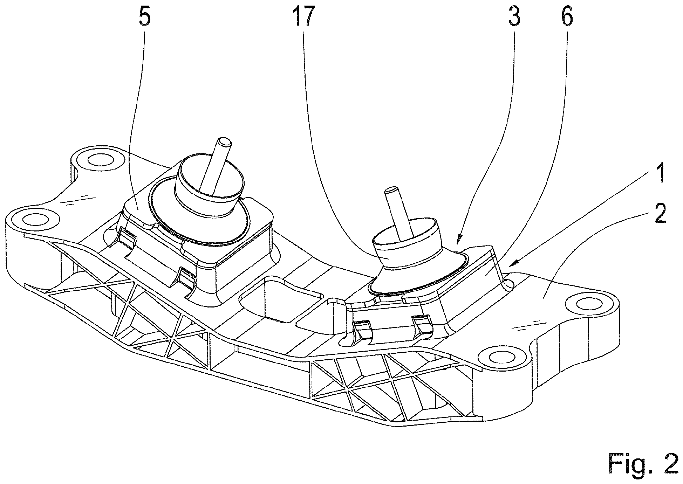

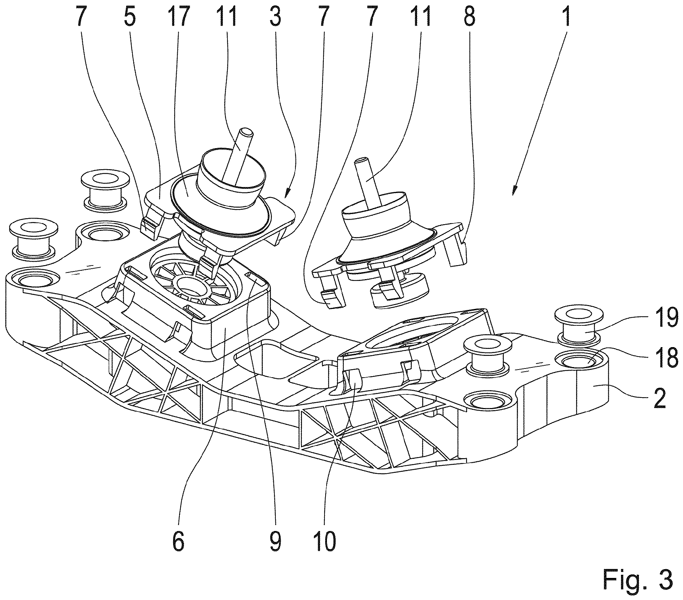

Die Figur 2 zeigt die Aggregatlagerung 1 ohne das Getriebe 4, während die Figur 3 eine Explosionszeichnung der Aggregatlagerung 1 darstellt. Wie aus einer Zusammenschau der Figuren 2 und 3 zu erkennen, werden die Aggregatlager 3 durch eine Schnappverbindung an dem Querträger 2 befestigt. Zu diesem Zweck umfassen die Aggregatlager 3 je ein Verbindungsteil 5 aus Kunststoff, von dem sich vier elastische Schnapphaken 7 mit endseitigen Rastnasen 8 in Richtung zum Querträger 2 erstrecken.

Beim Zusammenfügen der Aggregatlager 3 und dem Querträger 2 werden die Schnapphaken 7 in entsprechende erste Aussparungen 9 in dem Querträger 2 eingeführt, wobei die ersten Aussparungen 9 und die Schnapphaken 7 so ausgestaltet sind, dass die Rastnasen 8 beim Einführen in die Aussparungen 9 komprimiert werden, bevor sie zu zweiten Aussparungen 10, die quer zu den ersten Aussparungen 9 verlaufen, gelangen und sich wieder aufweiten, wodurch die Schnapphaken 7 sich gegenüber dem Querträger 2 verhaken und die Aggregatlager 3 formschlüssig mit dem Querträger 2 verbunden werden.

Die Aussparungen 9 und 10 sind in podestartigen Vorsprüngen 6 auf der Oberseite der Querträger 2 vorgesehen, wobei die Vorsprünge 6 einstückig mit den Querträgern 2 aus Kunststoff ausgebildet sind. Die Vorsprünge 6 und das Verbindungsteil 5 sind im Wesentlichen deckungsgleich.

Die Aggregatlager 3 umfassen je ein kolbenförmiges Anschlussteil 11, das im Wesentlichen aus einem ersten zylindrischen Abschnitt 12 mit einem ersten Durchmesser und einem zweiten zylindrischen Abschnitt mit einem relativ zu dem ersten Durchmesser größeren zweiten Durchmesser besteht, wobei der zweite zylindrische Abschnitt einen Stopperabschnitt 13 bildet. Das Anschlussteil 11 besteht aus Metall und weist wenigstens an dem Stopperabschnitt 13 eine Gummibeschichtung 14 auf.

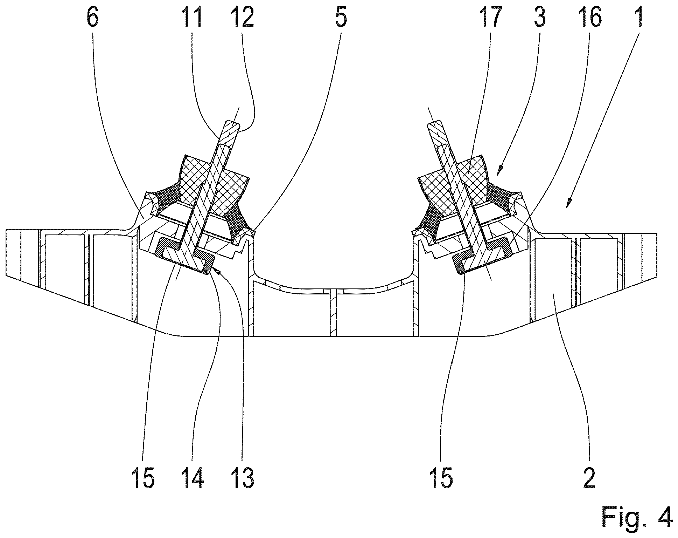

Der erste zylindrische Abschnitt 12, der im Ausführungsbeispiel zweiteilig ausgebildet ist, dient zum Anschluss des Getriebes 4, während der Stopperabschnitt 13 dazu dient, Bewegungen des Getriebes 4 gegenüber dem Querträger 2 zu begrenzen. Dazu ist der Stopperabschnitt 13 in einer entsprechenden Ausnehmung 15 in dem Querträger 2 aufgenommen, wie in Figur 4 dargestellt. Der Stopperabschnitt 13 ist in seiner Beweglichkeit innerhalb der Ausnehmung 15 in alle Richtungen begrenzt. Somit werden plötzlich auftretende hohe Belastungen auf das Getriebe 4 - beispielsweise bei einem Unfall - über den Stopperabschnitt 13 auf angrenzende Anschlagflächen 16, innerhalb derer sich die Ausnehmung 15 befindet, übertragen und die resultierende Relativbewegung zwischen dem Getriebe 4 und dem Querträger 2 begrenzt.

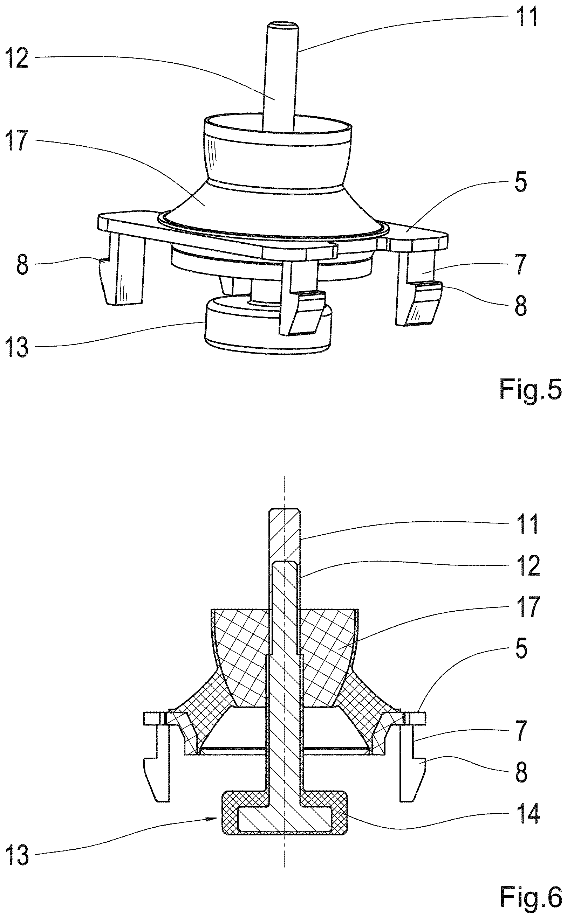

Die Figuren 5 und 6 zeigen das Aggregatlager 3 in perspektivischer Darstellung bzw. im Querschnitt. Das Aggregatlager 3 umfasst einen Elastomerkörper 17 zur Übertragung von Lasten und Schwingungen zwischen dem Getriebe 4 und dem Querträger 2, wobei das Elastomer des Elastomerkörpers 17 insbesondere durch Gummi gebildet ist.

Wie in den Figuren 1 bis 4 gezeigt, umfasst der Querträger 2 mehrere Bohrungen 18 mit darin aufgenommenen Verschraubungsbuchsen 19, mittels derer der Querträger 2 mit einer nicht gezeigten Karosserie eines Kraftfahrzeugs verschraubt werden kann.

Der Querträger 2 und die Kunststoffteile der Aggregatlager 3 bestehen aus Kunststoff, insbesondere aus thermoplastischem Kunststoff, insbesondere aus faserverstärktem Polyamid.

### Bezugszeichen

- 1: Aggregatlagerung
- 2: Querträger
- 3: Aggregatlager
- 4: Getriebe
- 5: Verbindungsteil
- 6: Vorsprünge
- 7: Schnapphaken
- 8: Rastnasen
- 9: erste Aussparungen
- 10: zweite Aussparungen
- 11: Anschlussteil
- 12: erster zylindrischer Abschnitt
- 13: Stopperabschnitt
- 14: Gummibeschichtung
- 15: Ausnehmung
- 16: Anschlagflächen
- 17: Elastomerkörper
- 18: Bohrungen
- 19: Verschraubungsbuchsen

## Patentansprüche

1. Aggregatlagerung (1), für ein Kraftfahrzeug, umfassend einen Querträger (2) und mindestens ein Aggregatlager (3) zwischen dem Querträger (2) und einem Aggregat, wobei das mindestens eine Aggregatlager (3) durch eine formschlüssige Verbindung an dem Querträger (2) befestigbar ist und mindestens einen Elastomerkörper (17) zum Übertragen von Lasten und Schwingungen zwischen dem Aggregat und dem Querträger (2) sowie ein Anschlussteil (11) umfasst, das an einem Ende mit dem Aggregat verbunden werden kann, **dadurch gekennzeichnet, dass** das Anschlussteil (11) am gegenüberliegenden Ende einen Stopperabschnitt (13) umfasst, der innerhalb einer Ausnehmung (15) in dem Querträger (2) beweglich anordenbar ist, wobei die Beweglichkeit des Stopperabschnitts (13) in mindestens eine Richtung durch mindestens eine Anschlagfläche (16) an der Ausnehmung (15) begrenzt ist.

2. Aggregatlagerung (1) nach Anspruch 1, **dadurch gekennzeichnet, dass** die formschlüssige Verbindung durch eine Schnappverbindung gebildet ist.

3. Aggregatlagerung (1) nach Anspruch 1 oder 2, **dadurch gekennzeichnet, dass** das mindestens eine Aggregatlager (3) ein Verbindungsteil (5) umfasst, an dem mindestens vier elastisch verformbare Fügeteile angeordnet sind, die in jeweiligen Aussparungen (9, 10) des Querträgers (2) verhakbar sind.

4. Aggregatlagerung (1) nach Anspruch 3, wobei die Fügeteile jeweils durch einen Schnapphaken (7) mit einer elastisch verformbaren Rastnase (8) gebildet sind, die gegenüber dem Querträger (2) verrastbar ist.

5. Aggregatlagerung (1) nach Anspruch 3 oder 4, **dadurch gekennzeichnet, dass** der Querträger für jedes der Aggregatlager (3) einen Vorsprung (6) aufweist, wobei der Vorsprung (6) zur Aufnahme oder Befestigung des Verbindungsteils (5) ausgebildet ist und/oder die Aussparungen (9, 10) in dem Vorsprung (6) angeordnet sind.

6. Aggregatlagerung (1) nach einem der Ansprüche 3 bis 5, **dadurch gekennzeichnet, dass** der Elastomerkörper (17) an dem Verbindungsteil (5) angeordnet ist.

7. Aggregatlagerung (1) nach einem der vorhergehenden Ansprüche, **dadurch gekennzeichnet, dass** das Aggregatlager (3) als Gummilager in einem Lagergehäuse ausgebildet ist.

8. Aggregatlagerung (1) nach einem der vorhergehenden Ansprüche, **dadurch gekennzeichnet, dass** das Anschlussteil (11) aus Metall gebildet ist und zumindest im Bereich des Stopperabschnitts (13) mit einem Elastomer beschichtet oder umhüllt ist.

9. Aggregatlagerung (1) nach einem der vorhergehenden Ansprüche, **dadurch gekennzeichnet, dass** der Stopperabschnitt (13) gegenüber einem angrenzenden Abschnitt des Anschlussteiles (11) einen relativ größeren Querschnitt aufweist und die Beweglichkeit des Stopperabschnittes (13) innerhalb der Ausnehmung (15) in X-, Y- und Z-Richtung begrenzt ist.

10. Aggregatlagerung (1) nach einem der Ansprüche 3 bis 5 oder nach Anspruch 6, **dadurch gekennzeichnet, dass** der Querträger (2) und das Verbindungsteil (5) aus Kunststoff sind.

11. Aggregatlagerung (1) nach einem der vorhergehenden Ansprüche, **dadurch gekennzeichnet, dass** das Anschlussteil (11) die Form eines Bolzens aufweist, wobei der Stopperabschnitt (13) durch den Bolzenkopf gebildet wird, dessen Beweglichkeit in allen Richtungen begrenzt ist.

## Claims

1. Engine mounting (1), for a vehicle, comprising a cross-member (2) and at least one engine mount (3) between the cross-member (2) and a unit, whereby the engine mount (3) of which there is at least one can be fastened with an interlocking connection to the cross-member (2) and comprises at least one elastomer element (17) for transferring loads and vibrations between the unit and the cross-member (2) and a connecting part (11) that can be connected to the unit at one end, **characterised in that** the connector part (11) comprises a stopper section (13) at the opposite end, which can be arranged flexibly in a recess (15) in the cross-member (2), whereby the flexibility of the stopper section (13) is limited in at least one direction by at least one stop surface (16) on the recess (15).

2. Engine mounting (1) according to claim 1, **characterised in that** the interlocking connection is a snap connection.

3. Engine mounting (1) according to claim 1 or 2, **characterised in that** the engine mount (3) of which there is at least one comprises a connection piece (5) where at least four malleable adherends which can interlock in the relevant openings (9, 10) of the cross-member (2).

4. Engine mounting (1) according to claim 3, whereby the adherends are each formed of a snap-in hook (7) with a malleable latching lug (8) which can be latched opposite the cross-member (2).

5. Engine mounting (1) according to claim 3 or 4, **characterised in that** the cross-member has a protrusion (6) for each of the engine mounts (3), whereby the protrusion (6) is designed to receive or fasten the connection piece (5) and/or the openings (9, 10) are arranged in the protrusion (6).

6. Engine mounting (1) according to any one of claims 3 to 5, **characterised in that** the elastomer element (17) is arranged on the connection piece (5).

7. Engine mounting (1) according to any one of the preceding claims, **characterised in that** the engine mount (3) is designed as a rubber mount in a mount housing.

8. Engine mounting (1) according to any one of the preceding claims, **characterised in that** the connector part (11) is formed of metal and is coated or enclosed with an elastomer, at least in the area of the stopper section (13).

9. Engine mounting (1) according to any one of the preceding claims, **characterised in that** the stopper section (13) has a relatively larger cross-section in comparison to an adjoining section of the connector part (11) and the flexibility of the stopper section (13) is restricted on X, Y and Z axes inside the opening (15).

10. Engine mounting (1) according to any one of claims 3 to 5 or according to claim 6, **characterised in that** the cross-member (2) and the connection piece (5) are made of plastic.

11. Engine mounting (1) according to any one of the preceding claims, **characterised in that** the connector part (11) takes the form of a bolt, whereby the stopper section (13) is created by the bolt head, whose flexibility is limited in all directions.

## Revendications

1. Dispositif de palier d'agrégat (1) pour un véhicule automobile, comprenant une traverse (2) et au moins un palier d'agrégat (3) entre la traverse (2) et un agrégat, l'au moins un palier d'agrégat (3) pouvant être fixé à la traverse (2) par l'intermédiaire d'une liaison par complémentarité de forme et comprenant au moins un corps en élastomère (17) pour la transmission de charges et de vibrations entre l'agrégat et la traverse (2) ainsi qu'une partie de raccordement (11), qui peut être reliée à une extrémité avec l'agrégat, **caractérisé en ce que** la partie de raccordement (11) comprend, à l'extrémité opposée, une portion d'arrêt (13) qui peut être disposée de manière mobile à l'intérieur d'un évidement (15) dans la traverse (2), la mobilité de la portion d'arrêt (13) dans au moins une direction étant limitée par au moins une surface de butée (16) au niveau de l'évidement (15).

2. Dispositif de palier d'agrégat (1) selon la revendication 1, **caractérisé en ce que** la liaison par complémentarité de forme est constituée d'une liaison par encliquetage.

3. Dispositif de palier d'agrégat (1) selon la revendication 1 ou 2, **caractérisé en ce que** l'au moins un palier d'agrégat (3) comprend une partie de liaison (5) sur laquelle sont disposées au moins quatre parties de jonction déformables élastiquement, qui peuvent être accrochées dans des évidements (9, 10) correspondants de la traverse (2).

4. Dispositif de palier d'agrégat (1) selon la revendication 3, les parties de jonction étant constituées chacune d'un crochet d'encliquetage (7) avec un embout d'encliquetage (8) déformable élastiquement, qui peut être encliqueté par rapport à la traverse (2).

5. Dispositif de palier d'agrégat (1) selon la revendication 3 ou 4, **caractérisé en ce que** la traverse comprend, pour chaque palier d'agrégat (3), une saillie (6), la saillie (6) étant conçue pour le logement ou la fixation de la partie de liaison (5) et/ou les évidements (9, 10) sont disposés dans la saillie (6).

6. Dispositif de palier d'agrégat (1) selon l'une des revendications 3 à 5, **caractérisé en ce que** le corps en élastomère (17) est disposé sur la partie de liaison (5).

7. Dispositif de palier d'agrégat (1) selon l'une des revendications précédentes, **caractérisé en ce que** le palier d'agrégat (3) est conçu comme un palier en caoutchouc dans un carter de palier.

8. Dispositif de palier d'agrégat (1) selon l'une des revendications précédentes, **caractérisé en ce que** la partie de raccordement (11) est constituée de métal et est revêtue ou enveloppée, au moins au niveau de la portion d'arrêt (13), avec un élastomère.

9. Dispositif de palier d'agrégat (1) selon l'une des revendications précédentes, **caractérisé en ce que** la portion d'arrêt (13) présente une section transversale plus importante par rapport à une portion adjacente de la partie de raccordement (11) et la mobilité de la portion d'arrêt (13) à l'intérieur de l'évidement (15) est limitée dans les directions X, Y et Z.

10. Dispositif de palier d'agrégat (1) selon l'une des revendications 3 à 5 ou selon la revendication 6, **caractérisé en ce que** la traverse (2) et la partie de liaison (5) sont constituées de matière plastique.

11. Dispositif de palier d'agrégat (1) selon l'une des revendications précédentes, **caractérisé en ce que** la partie de raccordement (11) présente la forme d'une cheville, la portion d'arrêt (13) étant constituée de la tête de la cheville, dont la mobilité est limitée dans toutes les directions.
